# EUROPEAN PATENT APPLICATION

(11) **EP 4 826 870 A1**
(43) Date of publication of application: **21.10.2026**
(21) Application number: 26171128.7
(22) Date of filing: 08.04.2026
(51) Int. Cl.: H01M 50/209, H01M 50/233, H01M 50/289, H01M 50/291, H01M 50/249

(54) **PACK HOUSING AND BATTERY PACK INCLUDING THE SAME**

(30) Priority: 15.04.2025 KR 20250049048; 17.11.2025 KR 20250174015
(71) Applicant: Hyundai Motor Company, Seoul 06797 (KR); Kia Corporation, Seoul 06797 (KR)
(72) Inventor: KIM, Kyung Mo, 18280 Hwaseong-si, Gyeonggi-do (KR); KANG, Yu Won, 18280 Hwaseong-si, Gyeonggi-do (KR); LEE, Byung Soo, 18280 Hwaseong-si, Gyeonggi-do (KR); PARK, Hyung Jun, 18280 Hwaseong-si, Gyeonggi-do (KR); CHOI, Yong Hwan, 18280 Hwaseong-si, Gyeonggi-do (KR); SEO, Jeong Hun, 18280 Hwaseong-si, Gyeonggi-do (KR); KIM, Si Won, 18280 Hwaseong-si, Gyeonggi-do (KR); LEE, Jong Gu, 18280 Hwaseong-si, Gyeonggi-do (KR); SHIN, Gyung Hoon, 18280 Hwaseong-si, Gyeonggi-do (KR); JIN, Hyeon Su, 18280 Hwaseong-si, Gyeonggi-do (KR); JU, Jae Hyeon, 18280 Hwaseong-si, Gyeonggi-do (KR); CHUNG, Kyu Bin, 18280 Hwaseong-si, Gyeonggi-do (KR); LEE, Woo Chan, 18280 Hwaseong-si, Gyeonggi-do (KR); KO, Gun Woo, 18280 Hwaseong-si, Gyeonggi-do (KR); LEE, Jun Su, 18280 Hwaseong-si, Gyeonggi-do (KR); KIM, Chan Sol, 18280 Hwaseong-si, Gyeonggi-do (KR); YOON, Hyun Woo, 18280 Hwaseong-si, Gyeonggi-do (KR); JO, Min Je, 18280 Hwaseong-si, Gyeonggi-do (KR); PARK, Jong Gyu, 18280 Hwaseong-si, Gyeonggi-do (KR); BANG, Min Sik, 18280 Hwaseong-si, Gyeonggi-do (KR); NOH, Hwan, 18280 Hwaseong-si, Gyeonggi-do (KR); JEON, Hyun Wook, 18280 Hwaseong-si, Gyeonggi-do (KR); LEE, Seok Hwan, 18280 Hwaseong-si, Gyeonggi-do (KR); SONG, Gang Heun, 18280 Hwaseong-si, Gyeonggi-do (KR); CHOI, Seoung Ho, 18280 Hwaseong-si, Gyeonggi-do (KR); LIM, Hae Kyu, 18280 Hwaseong-si, Gyeonggi-do (KR)
(74) Representative: Viering, Jentschura & Partner mbB Patent- und Rechtsanwälte

(57) **Abstract**

1. A pack housing, comprising: a base plate (110); a side member (120) forming an accommodation space together with the base plate and connected to the base plate; a first cross member (130) extending in a direction intersecting the side member; and a second cross member (140) coupled to the first cross member, wherein the first cross member (130) comprises: a concave portion (132) disposed concavely in a direction intersecting the base plate so that the second cross member (140) is inserted into the concave portion; and a protruding portion (136) connected to an end portion of the concave portion (132), protruding in the direction intersecting the base plate, and configured to come into contact with the second cross member (140).

## Description

### CROSS-REFERENCE TO RELATED APPLICATION

The present application claims priority to and the benefit of Korean Patent Application No. 10-2025-0049048 filed in the Korean Intellectual Property Office on April 15, 2025, and Korean Patent Application No. 10-2025-0174015 filed in the Korean Intellectual Property Office on November 17, 2025, the entire contents of which are incorporated herein by reference.

### BACKGROUND OF THE PRESENT DISCLOSURE

### Field of the Present Disclosure

The present disclosure relates to a pack housing and a battery pack including the same, and more particularly, to a pack housing including a plurality of cross members configured for being coupled, and a battery pack including the same.

### Description of Related art

Recently, as the awareness of environmental problems and oil resource depletion has increased, research and development of electric vehicles, which are environment-friendly vehicles, have been emphasized. Examples of the electric vehicles include a plug-in hybrid electric vehicle (PHEV), a battery electric vehicle (BEV), a fuel cell electric vehicle (FCEV), and the like.

The electric vehicle may include a pack housing configured to support battery cells. Meanwhile, the electric vehicle utilizes the battery cells as power sources. Recently, efforts have been consistently made to increase capacities of the battery cells accommodated in the pack housing.

To improve the capacities of the battery cells, the battery cells may constitute a battery cell stack provided in the form of a cell-to-pack (CTP) configuration instead of a module, and the battery cell stack may be accommodated in the pack housing. Meanwhile, a cross member or the like for supporting surface pressure of the battery cell stack may be provided when the battery cell stack is mounted in the pack housing.

In this regard, a process of mounting and/or detaching the battery cell stack may be facilitated. As a result, there is an increasing need for a cross member structure capable of stably supporting the surface pressure of the battery cell stack.

### BRIEF SUMMARY

The present disclosure has been made in an effort to provide a pack housing configured for stably supporting surface pressure of a battery cell stack while facilitating a process of mounting and/or detaching the battery cell stack.

The present disclosure provides a pack housing with the features according to claim 1. Further preferred embodiments of the pack housing are described in the dependent claims.

According to various aspects of the present disclosure, the present disclosure provides a pack housing including: a base plate; a side member forming an accommodation space together with the base plate and connected to the base plate; a first cross member extending in a direction intersecting the side member; and a second cross member coupled to the first cross member, in which the first cross member includes: a concave portion disposed concavely in a direction intersecting the base plate so that the second cross member is inserted into the concave portion; and a protruding portion connected to an end portion of the concave portion, protruding in the direction intersecting the base plate, and configured to come into contact with the second cross member.

According to various aspects of the present disclosure, the first cross member may be disposed with a first concave-convex portion disposed on a side surface of the protruding portion that is directed toward the concave portion, the first concave-convex portion having a shape protruding or recessed in the direction intersecting the side member, and the second cross member may be disposed with a second concave-convex portion disposed at a position corresponding to the first concave-convex portion, the second concave-convex portion having a shape corresponding to the first concave-convex portion.

According to various aspects of the present disclosure, the first cross member may be further disposed with a third concave-convex portion disposed on an upper surface of the concave portion and having a shape protruding or recessed in the direction intersecting the base plate, and the second cross member may be further disposed with a fourth concave-convex portion disposed at a position corresponding to the third concave-convex portion, the fourth concave-convex portion having a shape corresponding to the third concave-convex portion.

According to various aspects of the present disclosure, the first concave-convex portion may extend in the direction intersecting the base plate.

According to various aspects of the present disclosure, based on a direction intersecting the first cross member, the first concave-convex portion may be disposed at a center portion of the protruding portion, and the second concave-convex portion may be disposed at a center portion of the second cross member.

According to various aspects of the present disclosure, the first cross member may be disposed with a guide hole disposed in an upper surface of the concave portion, and the second cross member may be disposed with a guide protrusion protruding from a surface directed toward the upper surface of the concave portion, the guide protrusion being inserted into the guide hole.

According to various aspects of the present disclosure, the protruding portion may be disposed as a pair of protruding portions respectively connected to first and second opposite end portions of the concave portion and disposed to be opposite to each other.

According to various aspects of the present disclosure, a total sum of a height of the concave portion and a height of the second cross member may be equal to a height of the protruding portion.

According to various aspects of the present disclosure, a thickness of the second cross member may be equal to a thickness of the first cross member.

According to various aspects of the present disclosure, the second cross member may be inserted into the concave portion in the direction intersecting the base plate.

According to various aspects of the present disclosure, the present disclosure provides a battery pack including: a pack housing; and a plurality of battery cell stacks accommodated in the pack housing, in which the pack housing includes: a base plate; a side member forming an accommodation space together with the base plate and connected to the base plate; a first cross member extending in a direction intersecting the side member; and a second cross member coupled to the first cross member, in which the first cross member is disposed to face the battery cell stack, and in which the first cross member includes: a concave portion disposed concavely in a direction intersecting the base plate so that the second cross member is inserted into the concave portion; and a protruding portion connected to an end portion of the concave portion, protruding in the direction intersecting the base plate, and configured to come into contact with the second cross member.

According to various aspects of the present disclosure, a height of the protruding portion may be equal to a height of each of the plurality of battery cell stacks.

According to various aspects of the present disclosure, the plurality of battery cell stacks may each include: a plurality of battery cells disposed in a direction intersecting the first cross member; and side covers disposed at first and second opposite sides of the plurality of battery cells based on the direction intersecting the first cross member, the side covers each including a guide member configured to come into contact with an upper surface of the concave portion.

According to various aspects of the present disclosure, the guide member may protrude in the direction intersecting the first cross member from a surface of the side covers that are directed toward the concave portion.

According to various aspects of the present disclosure, the battery pack may further include: a fixing member disposed on upper surfaces of the plurality of battery cell stacks and coupled to the second cross members disposed at first and second opposite sides of the plurality of battery cell stacks based on a direction intersecting the first cross member.

According to various aspects of the present disclosure, the plurality of cross members may be coupled and/or uncoupled, which may simplify the process of mounting and/or detaching the battery cell stack and stably support the surface pressure of the battery cell stack.

### BRIEF DESCRIPTION OF THE DRAWINGS

FIG. 1 is an exploded perspective view exemplarily illustrating a battery pack according to an exemplary embodiment of the present disclosure.
FIG. 2 is a perspective view exemplarily illustrating a pack housing according to the exemplary embodiment of the present disclosure.
FIG. 3 is an exploded perspective view exemplarily illustrating a battery cell stack according to the exemplary embodiment of the present disclosure.
FIG. 4 is a view exemplarily illustrating the battery cell stack disposed in the pack housing according to the exemplary embodiment of the present disclosure.
FIG. 5 is a perspective view exemplarily illustrating the pack housing in which the battery cell stack according to the exemplary embodiment of the present disclosure is disposed.
FIG. 6 is a perspective view exemplarily illustrating the pack housing in which the battery cell stack according to the exemplary embodiment of the present disclosure is disposed when viewed from a region spaced apart upwards.
FIG. 7 is a perspective view exemplarily illustrating a second cross member according to the exemplary embodiment of the present disclosure.
FIG. 8 is a perspective view exemplarily illustrating the pack housing to which the second cross member according to the exemplary embodiment of the present disclosure is coupled.
FIG. 9 is a top plan view exemplarily illustrating the pack housing to which the second cross member according to the exemplary embodiment of the present disclosure is coupled.
FIG. 10 is a cross-sectional side view exemplarily illustrating the battery pack to which the second cross member according to the exemplary embodiment of the present disclosure is coupled.
FIG. 11 is a top plan view exemplarily illustrating the battery cell stack to which surface pressure according to the exemplary embodiment of the present disclosure is applied.
FIG. 12 is a top plan view exemplarily illustrating a state in which the battery cell stack according to the exemplary embodiment of the present disclosure is disposed in the pack housing.
FIG. 13 is a top plan view exemplarily illustrating the pack housing in which the battery cell stack according to the exemplary embodiment of the present disclosure is disposed.
FIG. 14 is a top plan view exemplarily illustrating the pack housing to which the second cross member according to the exemplary embodiment of the present disclosure is coupled.

### DETAILED DESCRIPTION

Hereinafter, some embodiments of the exemplary embodiment of the present disclosures will be described in detail with reference to the illustrative drawings. In giving reference numerals to constituent elements of the respective drawings, it should be noted that the same constituent elements will be predetermined by the same reference numerals, if possible, even though the constituent elements are illustrated in different drawings. Furthermore, in the following description of the exemplary embodiment of the present disclosures, a detailed description of related publicly-known configurations or functions will be omitted when it is determined that the detailed description obscures the understanding of the exemplary embodiment of the present disclosures.

Furthermore, the terms first, second, A, B, (a), and (b) may be used to describe constituent elements of the exemplary embodiment of the present disclosures. These terms are used only for the purpose of discriminating one constituent element from another constituent element, and the nature, the sequences, or the orders of the constituent elements are not limited by the terms. Furthermore, unless otherwise defined, all terms used herein, including technical or scientific terms, have the same meaning as commonly understood by those skilled in the art to which the exemplary embodiment of the present disclosure pertains. The terms such as those defined in commonly used dictionaries should be interpreted as having meanings consistent with meanings in the context of related technologies and should not be interpreted as ideal or excessively formal meanings unless explicitly defined in the present application.

Hereinafter, a pack housing and a battery pack including the same according to an exemplary embodiment of the present disclosure will be described with reference to the drawings.

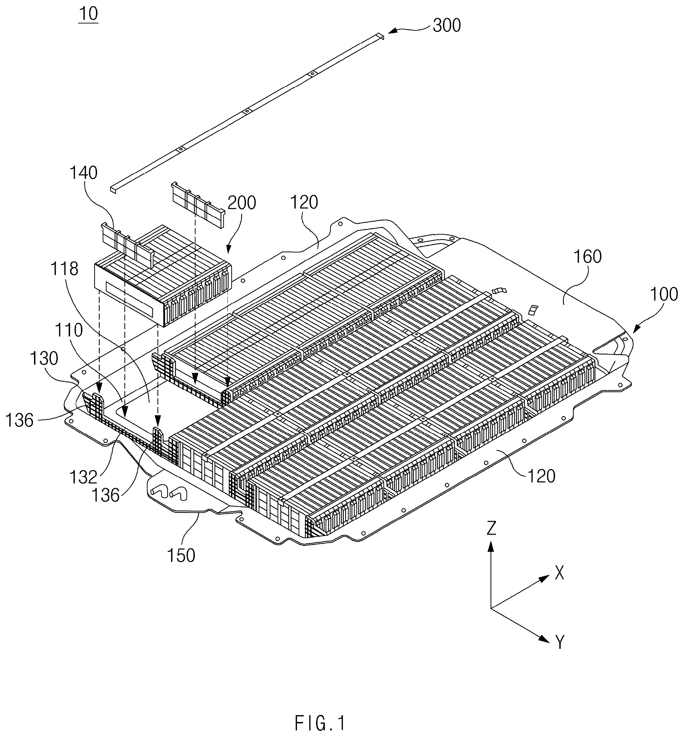

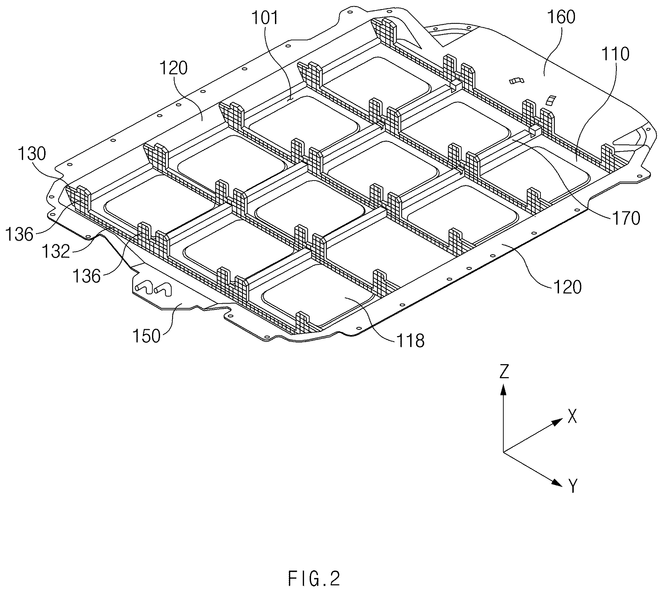

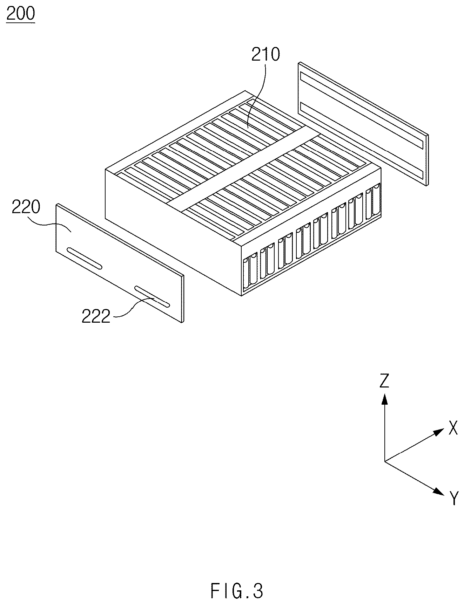

FIG. 1 is an exploded perspective view exemplarily illustrating a battery pack according to an exemplary embodiment of the present disclosure. FIG. 2 is a perspective view exemplarily illustrating a pack housing according to the exemplary embodiment of the present disclosure. FIG. 3 is an exploded perspective view exemplarily illustrating a battery cell stack according to the exemplary embodiment of the present disclosure.

With reference to FIG. 1, FIG. 2, and FIG. 3, a battery pack 10 according to an exemplary embodiment of the present disclosure may include a pack housing 100, a plurality of battery cell stacks 200, and fixing members 300.

The pack housing 100 may include a base plate 110, side members 120, first cross members 130, second cross members 140, a front member 150, a rear member 160, and third cross members 170.

The base plate 110 may be a bottom member configured to define a bottom surface of the pack housing 100 and support the battery cell stacks 200. Heat dissipation members 118 may be disposed on a surface of the base plate 110 that is in contact with the battery cell stacks 200. The heat dissipation member 118 may facilitate transfer of conductive heat between the base plate 110 and the battery cell stack 200, thereby improving heat dissipation performance of the battery pack 10. The heat dissipation member 118 may be disposed by being uniformly applied with an appropriate thickness onto the base plate 110.

The side members 120, the front member 150, and the rear member 160, together with the base plate 110, may define an accommodation space 101 in which the plurality of battery cell stacks 200 are accommodated.

The side members 120 may be disposed as a pair of side members 120 and cover two opposite side regions of the accommodation space 101 based on a second direction (direction Y or direction opposite to direction Y). The side members 120 may extend in a first direction (direction X) and be connected to the front member 150 and the rear member 160.

The side member 120 may be connected to the base plate 110 and coupled to the base plate 110.

The front member 150 may cover one side region of the accommodation space 101 based on the first direction (direction opposite to direction X). The front member 150 may be connected to the base plate 110 and coupled to the base plate 110.

The rear member 160 may cover the other side region of the accommodation space 101 based on the first direction. The rear member 160 may be connected to the base plate 110 and coupled to the base plate 110.

Meanwhile, the base plate 110, the side members 120, the front member 150, and the rear member 160 may be disposed as separate components. However, the base plate 110, the side members 120, the front member 150, and the rear member 160 may be disposed as a single component.

The first cross member 130 may be connected to the base plate 110 and coupled to the base plate 110. The first cross member 130 may extend between the pair of side members 120 in the direction (direction Y) intersecting the side member 120. The first cross members 130 may be disposed as a plurality of first cross members 130. The plurality of first cross members 130 may be spaced apart from one another in the first direction (direction X) and extend in the second direction (direction Y).

The first cross member 130 may be disposed between the pair of battery cell stacks 200 spaced apart from one another in the first direction X. The first cross members 130 may be disposed at two opposite end portions of the battery cell stack 200 based on the first direction (direction X) and prevent battery cells from swelling in the first direction (direction X).

Two opposite end portions of the first cross member 130 based on the second direction (direction Y) may be respectively directed toward the pair of side members 120. The first cross member 130 may be supported by the pair of side members 120.

The first cross member 130 may be disposed to face the battery cell stack 200. The first cross members 130 may cover two opposite side regions of the battery cell stack 200 (based on direction X or direction opposite to direction X). The first cross member 130 may be disposed opposite to the battery cell stack 200 in the direction (direction X) intersecting the first cross member 130.

The first cross member 130 may include concave portions 132 and protruding portions 136.

The concave portion 132 may be disposed concavely in a direction (direction Z) intersecting the base plate 110, and the second cross member 140 may be inserted into the concave portion 132. The concave portion 132 and the second cross member 140 may have complementary shapes. A position at which the second cross member 140 is coupled to the first cross member 130 is determined by the concave portion 132 and the second cross member 140 that are complementary so that the first cross member 130 and the second cross member 140 may be more accurately coupled. The concave portion 132 may be advantageous in avoiding interference with a jig that loads the battery cell stack 200.

The protruding portion 136 may be connected to an end portion of the concave portion 132, protrude in the direction (direction Z) intersecting the base plate 110, and come into contact with the second cross member 140. For example, the protruding portions 136 may be disposed as a pair of protruding portions 136 respectively connected to two opposite end portions of the concave portion 132 (based on direction Y or direction opposite to direction Y) and disposed to be opposite to each other. In the instant case, the pair of protruding portions 136 may be in contact with two opposite surfaces of the second cross member 140 (based on direction Y or direction opposite to direction Y). The protruding portions 136 may be disposed at two opposite end portions of the battery cell stack 200 based on the first direction (direction X) and maintain surface pressure applied to the battery cells in the first direction (direction X).

The second cross member 140 may be inserted into the concave portion 132 in the direction (direction Z) intersecting the base plate 110. That is, the second cross member 140 may be coupled to the first cross member 130 from above the first cross member 130. In a state in which the second cross member 140 is aligned to overlap the first cross member 130 from above the first cross member 130, the second cross member 140 may be coupled to the first cross member 130, thereby forming a single cross member. Furthermore, the second cross member 140 may be uncoupled in the direction (direction Z) intersecting the base plate 110. As a result, the coupling structure according to an exemplary embodiment of the present disclosure may simplify the process of mounting and/or detaching the battery cell stack 200, thereby improving the working efficiency, maintaining the structural rigidity, and easily maintaining the surface pressure applied to the battery cell stack 200.

The second cross member 140 may include a shape corresponding to a region disposed by the concave portion 132 and the pair of protruding portions 136. That is, the second cross member may fill a region disposed by an upper surface of the concave portion 132 and side surfaces of the pair of protruding portions 136 that are directed toward the concave portion 132. In the instant case, a movement of the second cross member 140 in the second direction (direction Y) may be restricted by the pair of protruding portions 136.

The second cross members 140 may be disposed as a plurality of second cross members 140. The plurality of second cross members 140 is configured as an independent member that may be individually coupled to the concave portion 132 of the first cross member 130. With the above-mentioned configuration, the plurality of second cross members 140 may be selectively mounted at necessary positions or detached. Furthermore, because the second cross members 140 are coupled independently, only some members may be selectively separated and/or replaced in case that the corresponding members are damaged or required to be replaced, thereby improving maintenance.

The third cross member 170 may extend in the direction (direction X) intersecting the first cross member 130. The third cross member 170 may be disposed between the battery cell stacks 200 spaced apart from each other in the second direction (direction Y) among the plurality of battery cell stacks 200. The third cross member 170 may be coupled to the base plate 110 so that a position thereof may be fixed.

The plurality of battery cell stacks 200 may be accommodated in the pack housing 100. Each of the plurality of battery cell stacks 200 is not disposed in a form of a module disposed with a module housing or the like, but the plurality of battery cell stacks 200 in which the plurality of battery cells are stacked may be disposed in the pack housing 100.

The plurality of battery cell stacks 200 may each include a plurality of battery cells 210 and side covers 220.

The plurality of battery cells 210 may be disposed in the direction (direction X) intersecting the first cross member 130. For example, the plurality of battery cells 210 may each include a long side portion extending in the direction (direction Y) intersecting the side member 120, and a short side portion extending in the direction (direction X) intersecting the first cross member 130. The plurality of battery cells 210 may be disposed in the direction (direction X) intersecting the first cross member 130 so that the long side portions thereof are opposite to one another. The plurality of battery cells 210 may each include an approximately rectangular parallelepiped shape. However, the present disclosure is not limited thereto.

The side covers 220 may be disposed at two opposite sides of the plurality of battery cells 210 based on the direction (direction X or direction opposite to direction X) intersecting the first cross member 130. The side cover 220 may be disposed opposite to the long side portions of the plurality of battery cells 210 in the direction (direction X) intersecting the first cross member 130.

The side cover 220 may include guide members 222 disposed to be in contact with the upper surface of the concave portion 132. For example, the guide member 222 may protrude from a surface of the side cover 220, which is directed toward the concave portion 132, in the direction (direction X) intersecting the first cross member 130.

The fixing member 300 may be disposed on upper surfaces of the plurality of battery cell stacks 200 and coupled to the second cross members 140 disposed at two opposite sides of the plurality of battery cell stacks 200 based on the direction (direction X or direction opposite to direction X) intersecting the first cross member 130.

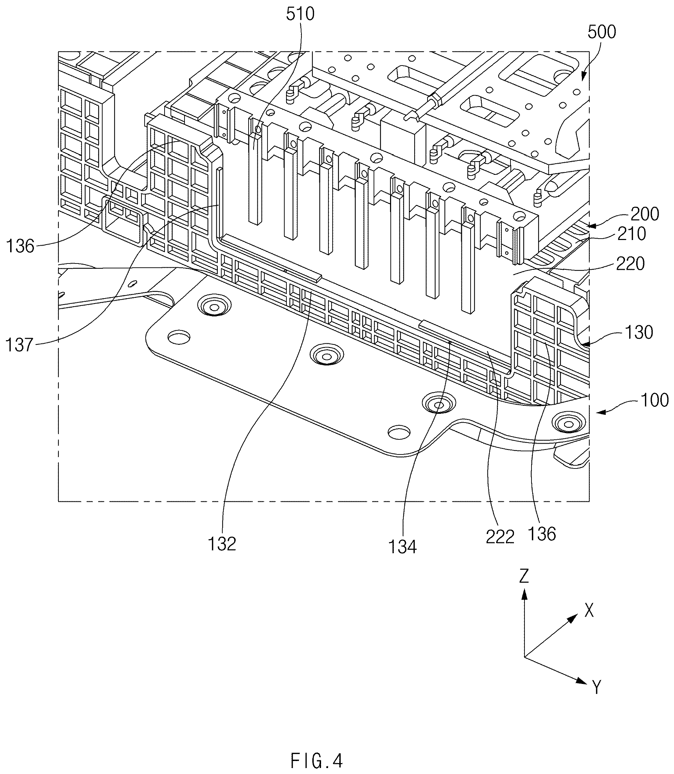

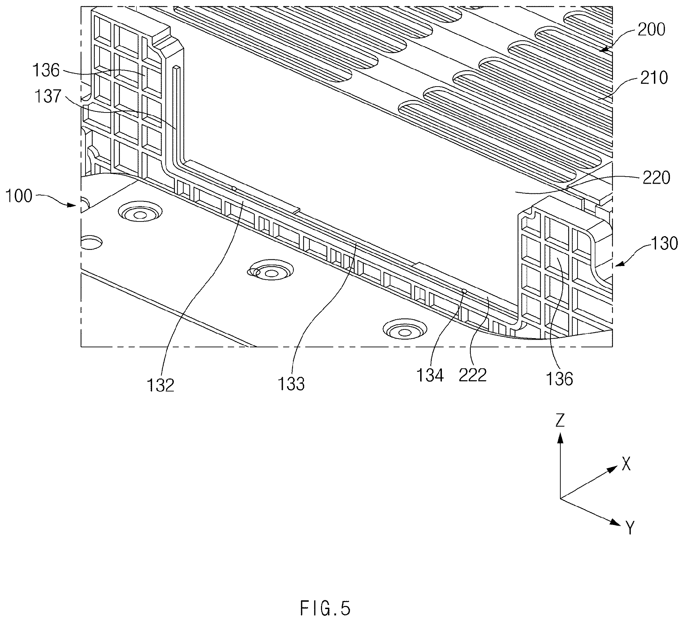

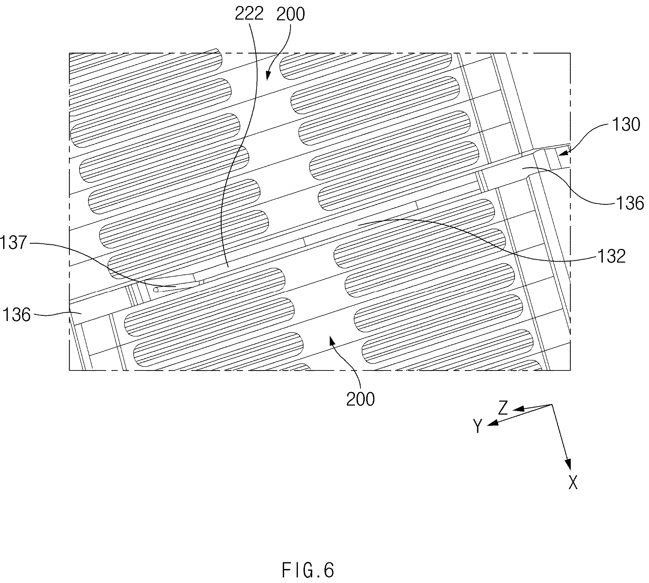

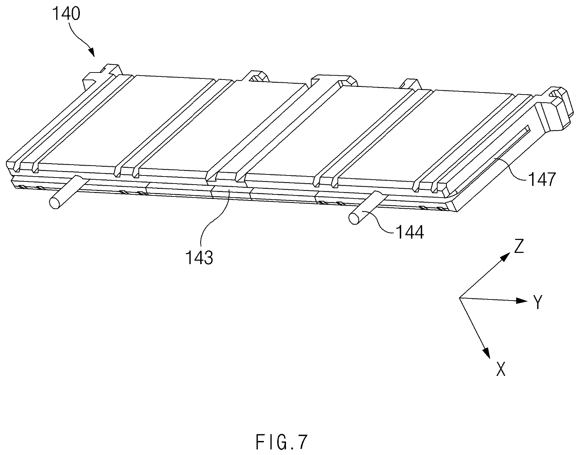

FIG. 4 is a view exemplarily illustrating the battery cell stack disposed in the pack housing according to the exemplary embodiment of the present disclosure. FIG. 5 is a perspective view exemplarily illustrating the pack housing in which the battery cell stack according to the exemplary embodiment of the present disclosure is disposed. FIG. 6 is a perspective view exemplarily illustrating the pack housing in which the battery cell stack according to the exemplary embodiment of the present disclosure is disposed when viewed from a region spaced apart upwards. FIG. 7 is a perspective view exemplarily illustrating the second cross member according to the exemplary embodiment of the present disclosure. Among the components illustrated in FIG. 4, FIG. 5, FIG. 6 and FIG. 7, a description of the above-mentioned components will be omitted.

With reference to FIG. 4, FIG. 5, FIG. 6 and FIG. 7, the first cross member 130 according to the exemplary embodiment of the present disclosure may include the concave portion 132, the protruding portions 136, first concave-convex portions 137, a third concave-convex portion 133, and guide holes 134, and the second cross member 140 may include second concave-convex portions 147, a fourth concave-convex portion 143, and guide protrusions 144.

A depth of the concave portion 132 may be greater than one-half or more of a height h4 of the battery cell stack 200. Therefore, grippers 510 of a jig 500 may ensure a grip area of one-half or more of the height h4 of the battery cell stack 200. That is, because the concave portion 132 is disposed, the gripper 510 of the jig 500 may securely grip the battery cell stack 200 and enter the concave portion 132 without causing interference with the first cross member 130.

The first concave-convex portion 137 may be disposed on a side surface of the protruding portion 136 that is directed toward the concave portion 132. The first concave-convex portion 137 may include a shape protruding or recessed in the direction (direction Y) intersecting the side member 120 (see FIG. 2). The first concave-convex portion 137 may extend in the direction (direction Z) intersecting the base plate 110 (see FIG. 2). Furthermore, the first concave-convex portion 137 may be disposed at a center portion of the protruding portion 136 based on the direction (direction X) intersecting the first cross member 130.

The second concave-convex portion 147 may be disposed at a position corresponding to the first concave-convex portion 137 and include a shape corresponding to the first concave-convex portion 137. The configuration in which the second concave-convex portion 147 includes a shape corresponding to the first concave-convex portion 137 may be understood as a configuration in which the second concave-convex portion 147 includes a recessed shape in case that the first concave-convex portion 137 includes a protruding shape, or the second concave-convex portion 147 includes a protruding shape in case that the first concave-convex portion 137 includes a recessed shape. The first concave-convex portion 137 and the second concave-convex portion 147 may be configured to guide the second cross member 140 so that the second cross member 140 is disposed at a precise position during the process of coupling the second cross member 140 to the first cross member 130. Meanwhile, because the first concave-convex portion 137 and the second concave-convex portion 147 include the shapes corresponding to each other, a relative movement in the first direction X between the first cross member 130 and the second cross member 140 may be restricted by interference between the first concave-convex portion 137 and the second concave-convex portion 147. Furthermore, the second concave-convex portion 147 may be disposed at a center portion of the second cross member 140 based on the direction (direction X) intersecting the first cross member 130.

In other words, the first concave-convex portion 137 and the second concave-convex portion 147 may have complementary shapes. The configuration in which the first concave-convex portion 137 and the second concave-convex portion 147 have complementary shapes may be understood as a configuration in which the first concave-convex portion 137 and the second concave-convex portion 147 form an engagement structure in which the first concave-convex portion 137 and the second concave-convex portion 147 face each other. A position at which the second cross member 140 is coupled to the first cross member 130 is determined as a single position by the first concave-convex portion 137 and the second concave-convex portion 147 that are complementary so that the first cross member 130 and the second cross member 140 may be accurately aligned, and a process of fastening the first cross member 130 and the second cross member 140 by using other members, such as bolts, in a state in which the first cross member 130 and the second cross member 140 are temporarily assembled may be facilitated.

The third concave-convex portion 133 may be disposed on the upper surface of the concave portion 132 and include a shape protruding or recessed in the direction (direction Z) intersecting the base plate 110. The third concave-convex portion 133 may extend in the direction (direction Y) intersecting the side member 120. Furthermore, the third concave-convex portion 133 may be disposed at a center portion of the concave portion 132 based on the direction (direction X) intersecting the first cross member 130.

The fourth concave-convex portion 143 may be disposed at a position corresponding to the third concave-convex portion 133 and include a shape corresponding to the third concave-convex portion 133. The configuration in which the fourth concave-convex portion 143 includes a shape corresponding to the third concave-convex portion 133 may be understood as a configuration in which the fourth concave-convex portion 143 includes a recessed shape in case that the third concave-convex portion 133 includes a protruding shape, or the fourth concave-convex portion 143 includes a protruding shape in case that the third concave-convex portion 133 includes a recessed shape. The third concave-convex portion 133 and the fourth concave-convex portion 143 may be configured to guide the second cross member 140 so that the second cross member 140 is disposed at a precise position during the process of coupling the second cross member 140 to the first cross member 130. Meanwhile, because the third concave-convex portion 133 and the fourth concave-convex portion 143 include the shapes corresponding to each other, a relative movement in the first direction (direction X) between the first cross member 130 and the second cross member 140 may be restricted by interference between the third concave-convex portion 133 and the fourth concave-convex portion 143. Furthermore, the fourth concave-convex portion 143 may be disposed at a center portion of the second cross member 140 based on the direction (direction X) intersecting the first cross member 130.

The guide hole 134 may be disposed in the upper surface of the concave portion 132 of the first cross member 130. For example, in case that the first cross member 130 includes the third concave-convex portion 133, the guide hole 134 may be disposed in the upper surface of the third concave-convex portion 133. The guide hole 134 may be disposed at a center portion of the concave portion 132 based on the direction (direction X) intersecting the first cross member 130.

The guide protrusion 144 may protrude from a surface of the second cross member 140 that is directed toward the upper surface of the concave portion 132. The guide protrusion 144 may be inserted into the guide hole 134. The guide protrusion 144 may be disposed at a center portion of the second cross member 140 based on the direction (direction X) intersecting the first cross member 130.

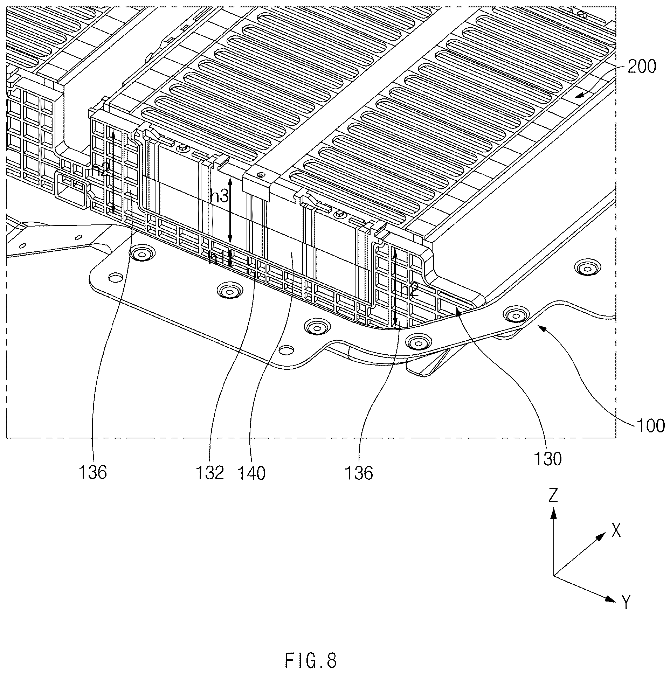

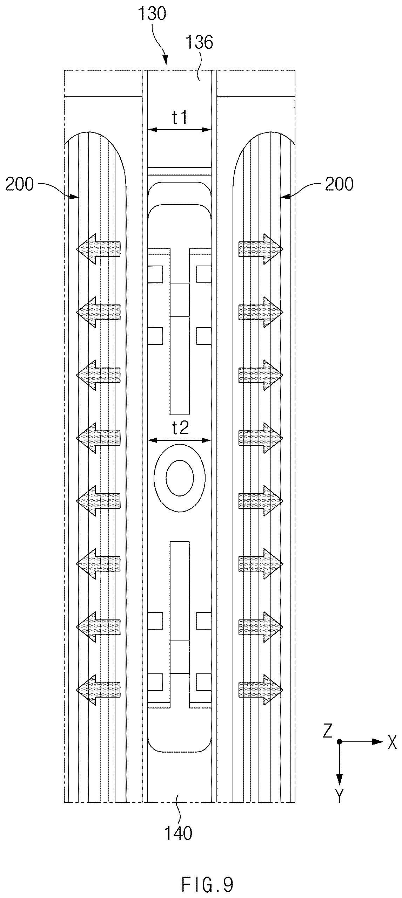

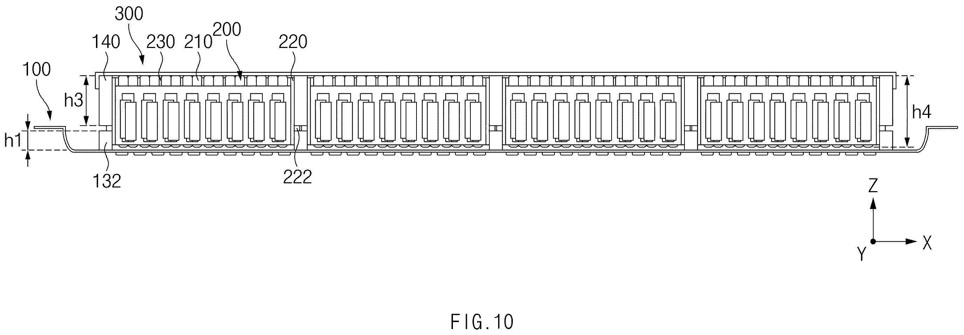

FIG. 8 is a perspective view exemplarily illustrating the pack housing to which the second cross member according to the exemplary embodiment of the present disclosure is coupled. FIG. 9 is a top plan view exemplarily illustrating the pack housing to which the second cross member according to the exemplary embodiment of the present disclosure is coupled. FIG. 10 is a cross-sectional side view exemplarily illustrating the battery pack to which the second cross member according to the exemplary embodiment of the present disclosure is coupled. Among the components illustrated in FIG. 8, FIG. 9 and FIG. 10, a description of the above-mentioned components will be omitted.

With reference to FIG. 8, FIG. 9 and FIG. 10, the second cross member 140 according to the exemplary embodiment of the present disclosure may be coupled to the first cross member 130. The first cross members 130 and the second cross members 140 may be disposed at two opposite sides of the plurality of battery cell stacks 200 (based on direction X or direction opposite to direction X). Furthermore, the first cross member 130 and the second cross member 140 may be disposed between the battery cell stacks 200 spaced apart from each other in the first direction (direction X) among the plurality of battery cell stacks 200.

A total sum of a height h1 of the concave portion 132 and a height h3 of the second cross member 140 may be equal to a height h2 of the protruding portion 136. Furthermore, a total sum of the height h1 of the concave portion 132 and the height h3 of the second cross member 140 may be equal to the height h4 of each of the plurality of battery cell stacks 200. Therefore, the height h2 of the protruding portion 136 may be equal to the height h4 of each of the plurality of battery cell stacks 200. In the instant case, the term "equal" may mean "substantially equal" within a predetermined error range.

A thickness t2 of the second cross member 140 may be equal to a thickness t1 of the first cross member 130. The thickness t2 of the second cross member 140, which is measured in the direction (direction X) intersecting the first cross member 130, may be equal to the thickness t1 of the first cross member 130. Therefore, the first cross member 130 and the second cross member 140 may be uniformly in contact with the plurality of battery cell stacks 200, thereby maintaining uniform surface pressure applied to the plurality of battery cell stacks 200.

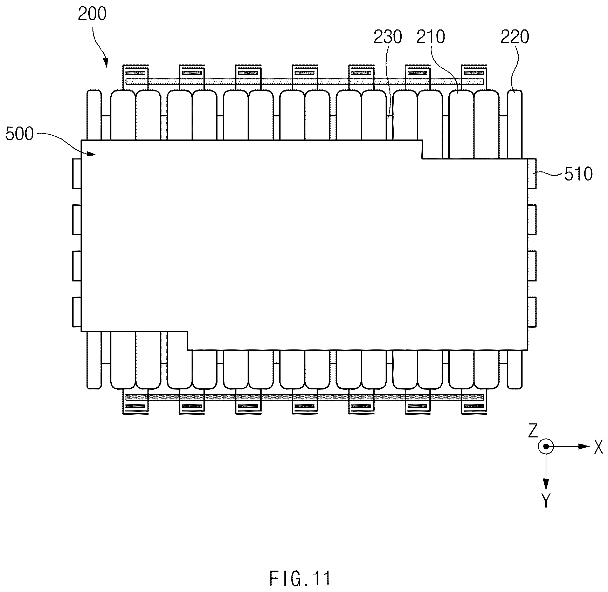

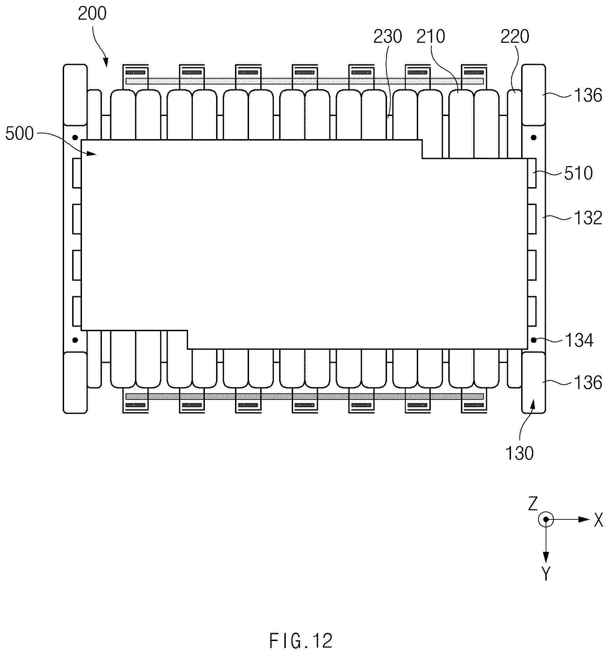

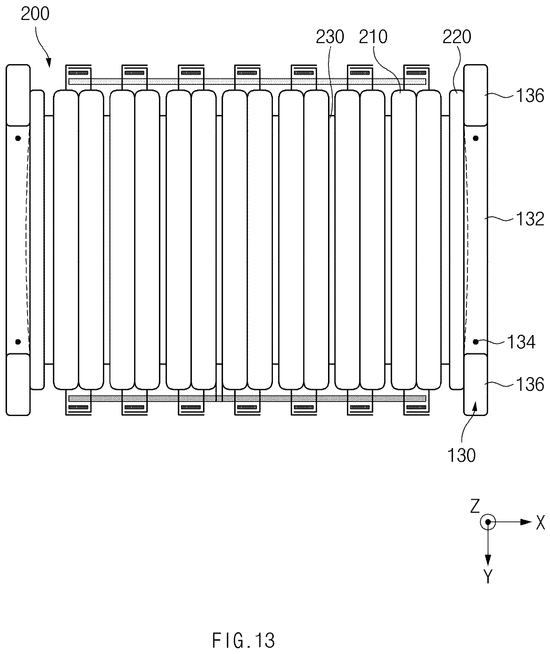

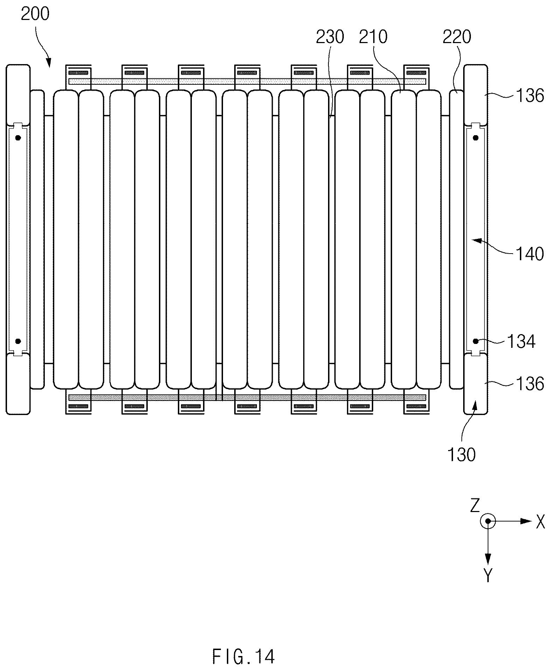

FIG. 11 is a top plan view exemplarily illustrating the battery cell stack to which surface pressure according to the exemplary embodiment of the present disclosure is applied. FIG. 12 is a top plan view exemplarily illustrating a state in which the battery cell stack according to the exemplary embodiment of the present disclosure is disposed in the pack housing. FIG. 13 is a top plan view exemplarily illustrating the pack housing in which the battery cell stack according to the exemplary embodiment of the present disclosure is disposed. FIG. 14 is a top plan view exemplarily illustrating the pack housing to which the second cross member according to the exemplary embodiment of the present disclosure is coupled. Among the components illustrated in FIG. 11, FIG. 12, FIG. 13 and FIG. 14, a description of the above-mentioned components will be omitted.

With reference to FIG. 11, in the battery cell stack 200 according to the exemplary embodiment of the present disclosure, pads 230 may be located between contact surfaces of the battery cells 210. The pad 230 may be a member including elasticity. The pad 230 is configured to protect the battery cell stack 200 from the first cross member 130.

The battery cell stack 200 may be integrally gripped by the grippers 510 of the jig 500. The grippers 510 of the jig 500 may be disposed as a pair of grippers 510 configured to grip two opposite surfaces of the battery cell stack 200 (based on direction X or direction opposite to direction X). The grippers 510 may grip the two opposite surfaces of the battery cell stack 200 that face the first cross members 130. In the instant case, the grippers 510 may apply surface pressure to the pads 230 included in the battery cell stack 200 so that the pad 230 has a compression ratio of 10% or more and 20% or less.

With reference to FIG. 12, the grippers 510 may include a plurality of feet corresponding to positions of the concave portions 132 disposed in the first cross members 130. Therefore, the grippers 510 of the jig 500 may enter the concave portions 132 and seat the gripped battery cell stack 200 on the base plate 110 (see FIG. 2).

With reference to FIG. 13, the grippers 510 of the jig 500 may seat the battery cell stack 200 on the base plate 110 in the state in which the grippers 510 integrally grip the battery cell stack 200, and then the grippers 510 may move backward to release the gripped state and then depart upwards from the first cross members 130. After the grippers 510 depart from the first cross members 130, the protruding portions 136 of the first cross members 130 may maintain surface pressure with respect to the overall height of the battery cell stack 200.

With reference to FIG. 14, the second cross members 140 may be coupled to the first cross members 130 on which the battery cell stack 200 is disposed. The second cross members 140 are coupled to the first cross members 130 so that sufficient surface pressure may be maintained with respect to the overall area of the battery cell stack 200.

The present disclosure has been described with reference to the limited embodiments and the drawings, but the present disclosure is not limited thereby. The present disclosure may be carried out in various forms by those skilled in the art, to which the present disclosure pertains, within the technical spirit of the present disclosure and the scope equivalent to the appended claims.

### LIST OF REFERENCE SIGNS

10: Battery pack
100: Pack housing
101: Accommodation space
110: Base plate
118: Heat dissipation member
120: Side member
130: First cross member
132: Concave portion
133: Third concave-convex portion
134: Guide hole
136: Protruding portion
137: First concave-convex portion
140: Second cross member
143: Fourth concave-convex portion
144: Guide protrusion
147: Second concave-convex portion
150: Front member
160: Rear member
170: Third cross member
200: Plurality of battery cell stacks
210: Battery cell
220: Side cover
222: Guide member
230: Pad
300: Fixing member
500: Jig
510: Gripper
h1: Height of concave portion
h2: Height of protruding portion
h3: Height of second cross member
h4: Height of battery cell stack
t1: Thickness of first cross member
t2: Thickness of second cross member

## Claims

1. A pack housing, comprising:
a base plate;
a side member forming an accommodation space together with the base plate and connected to the base plate;
a first cross member extending in a direction intersecting the side member; and
a second cross member coupled to the first cross member,
wherein the first cross member comprises:
a concave portion disposed concavely in a direction intersecting the base plate so that the second cross member is inserted into the concave portion; and
a protruding portion connected to an end portion of the concave portion, protruding in the direction intersecting the base plate, and configured to come into contact with the second cross member.

2. The pack housing of claim 1,
wherein the first cross member includes a first concave-convex portion disposed on a side surface of the protruding portion that is directed toward the concave portion, the first concave-convex portion having a shape protruding or recessed in the direction intersecting the side member, and
wherein the second cross member includes a second concave-convex portion disposed at a position corresponding to the first concave-convex portion, the second concave-convex portion having a shape corresponding to the first concave-convex portion.

3. The pack housing of claim 2,
wherein the first cross member further includes a third concave-convex portion disposed on an upper surface of the concave portion and having a shape protruding or recessed in the direction intersecting the base plate, and
wherein the second cross member further includes a fourth concave-convex portion disposed at a position corresponding to the third concave-convex portion, the fourth concave-convex portion having a shape corresponding to the third concave-convex portion.

4. The pack housing of claim 2 or 3, wherein the first concave-convex portion extends in the direction intersecting the base plate.

5. The pack housing of anyone of claims 2 to 4, wherein based on a direction intersecting the first cross member, the first concave-convex portion is disposed at a center portion of the protruding portion, and the second concave-convex portion is disposed at a center portion of the second cross member.

6. The pack housing of anyone of claims 2 to 5,
wherein the first cross member includes a guide hole disposed in an upper surface of the concave portion, and
wherein the second cross member includes a guide protrusion protruding from a surface directed toward the upper surface of the concave portion, the guide protrusion being inserted into the guide hole.

7. The pack housing of anyone of the preceding claims, wherein the protruding portion is disposed as a pair of protruding portions respectively connected to first and second opposite end portions of the concave portion and disposed to be opposite to each other.

8. The pack housing of anyone of the preceding claims, wherein a total sum of a height of the concave portion and a height of the second cross member is equal to a height of the protruding portion.

9. The pack housing of anyone of the preceding claims, wherein a thickness of the second cross member is equal to a thickness of the first cross member.

10. The pack housing of anyone of the preceding claims, wherein the second cross member is inserted into the concave portion in the direction intersecting the base plate.

11. The pack housing of anyone of the preceding claims, wherein a depth of the concave portion is greater than one-half or more of a height of a battery cell stack.

12. The pack housing of anyone of the preceding claims, wherein a height of the protruding portion is equal to a height of a battery cell stack.

13. The pack housing of anyone of claims 3 to 12, when dependent on claim 3,
wherein based on the direction intersecting the first cross member, the third concave-convex portion is disposed at a center portion of the concave portion, and the fourth concave-convex portion is disposed at a center portion of the second cross member.

14. The pack housing of anyone of claims 3 to 13, when dependent on claim 3,
wherein the third concave-convex portion extends in the direction intersecting the side member.

15. The pack housing of anyone of claims 6 to 14, when dependent on claim 6,
wherein based on the direction intersecting the first cross member, the guide hole is disposed at a center portion of the concave portion.
